# EUROPÄISCHE PATENTANMELDUNG

(11) **EP 3 825 207 A1**
(43) Veröffentlichungstag der Anmeldung: **26.05.2021**
(21) Anmeldenummer: 19212466.7
(22) Anmeldetag: 29.11.2019
(51) Int. Cl.: B62B 5/00, B62B 3/00

(54) **ROLLBEHÄLTER MIT SCHUTZWAND**

(30) Priorität: 20.11.2019 DE 102019131380
(71) Anmelder: Pilsl Transportgeräte GmbH, 94110 Wegscheid (DE); Feuchter GmbH, 4780 Schärding (AT)
(72) Erfinder: PILSL, Christian, 94107 Untergriesbach (AT); PILSL, Alfred, 94107 Untergriesbach (AT); FEUCHTER, Klaus, 94160 Ringelai (AT); FEUCHTER, Markus, 94065 Waldkirchen (AT)
(74) Vertreter: advotec.

(57) **Zusammenfassung**

Rollbehälter, insbesondere Rollpalette (1) mit einer ersten Seitenwand (2a) und einer der ersten Seitenwand (2a) gegenüberstehenden zweiten Seitenwand (2b) und einem Behälterboden (3), an welchem die erste Seitenwand (2a) und die zweite Seitenwand (2b) angeordnet sind, gekennzeichnet durch mindestens eine mindestens teilweise elastisch und flexibel ausgebildete Schutzwand (10), welche zwischen der ersten Seitenwand (2a) und der zweiten Seitenwand (2b) angeordnet ist und welche mit der ersten Seitenwand (2a) und mit der zweiten Seitenwand (2b) über an der Schutzwand (10) angeordnete Befestigungselemente (13) lösbar verbunden ist.

## Beschreibung

Die vorliegende Erfindung betrifft einen Rollbehälter, insbesondere eine Rollpalette mit einer ersten Seitenwand und einer der ersten Seitenwand gegenüberstehenden zweiten Seitenwand und mit einem Behälterboden, an welchem die erste Seitenwand und die zweite Seitenwand angeordnet sind. Am Palettenboden sind in der Regel vier Rollen zur Fortbewegung des Rollbehälters angeordnet.

Rollbehälter dieser Art sind aus dem Stand der Technik bekannt. Sie dienen beispielsweise im Bereich von Lebensmittel- und Supermärkten für den Transport der Waren vom Großhandelslager zum Einzelhandelsmarkt auf Lastkraftwagen und im Einzelhandelsmarkt zu den Regalen, in die die zu bereitzustellende Ware einzuordnen ist.

Bei den bekannten Rollbehältern der eingangs genannten Art besteht häufig das Problem, dass Waren zwischen den beiden Seitenwänden eines Rollbehälters aus dem Rollbehälter fallen. In der Regel sind die Waren auf dem Boden des Rollbehälters angeordnet. Manche Rollbehälter weisen auch mehrere, übereinander angeordnete Transportböden auf.

Um ein Herausfallen von Waren aus dem Rollbehälter zu verhindern, sind aus dem Stand der Technik starre bzw. nicht flexible Wände bekannt, die zwischen zwei Seitenwänden eines Rollbehälter angeordnet werden und mit den Seitenwänden verbunden sind. Diese starren Wände haben jedoch diverse Nachteile. So werden beispielsweise beim Beladen eines Rollbehälters oftmals die Seitenwände automatisch von Stapelmaschinen leicht auseinandergedrückt, um Waren auf einen Behälterboden, wie beispielsweise auf eine Palette auflegen zu können. Ein derartiges "Aufbiegen" ist jedoch bei den aus dem Stand der Technik bekannten Rollbehältern nur möglich, wenn keine Schutzwand an den Seitenwänden befestigt ist, da die starre Schutzwand einem solchen "Aufbiegen" entgegenwirken würde.

Der vorliegenden Erfindung liegt die Aufgabe zugrunde, einen Rollbehälter der eingangs genannten Art zur Verfügung zu stellen, welcher die Nachteile aus dem Stand der Technik überwindet.

Diese Aufgabe wird erfindungsgemäß durch einen Rollbehälter mit einer ersten Seitenwand und einer der ersten Seitenwand gegenüberstehenden zweiten Seitenwand und mit einem Behälterboden, an welchem die erste Seitenwand und die zweite Seitenwand angeordnet sind, gelöst, welcher Rollbehälter gekennzeichnet ist durch eine mindestens teilweise elastisch und flexibel ausgebildete Schutzwand, welche mit der ersten Seitenwand und mit der zweiten Seitenwand über an der Schutzwand angeordnete Befestigungselemente lösbar verbunden ist.

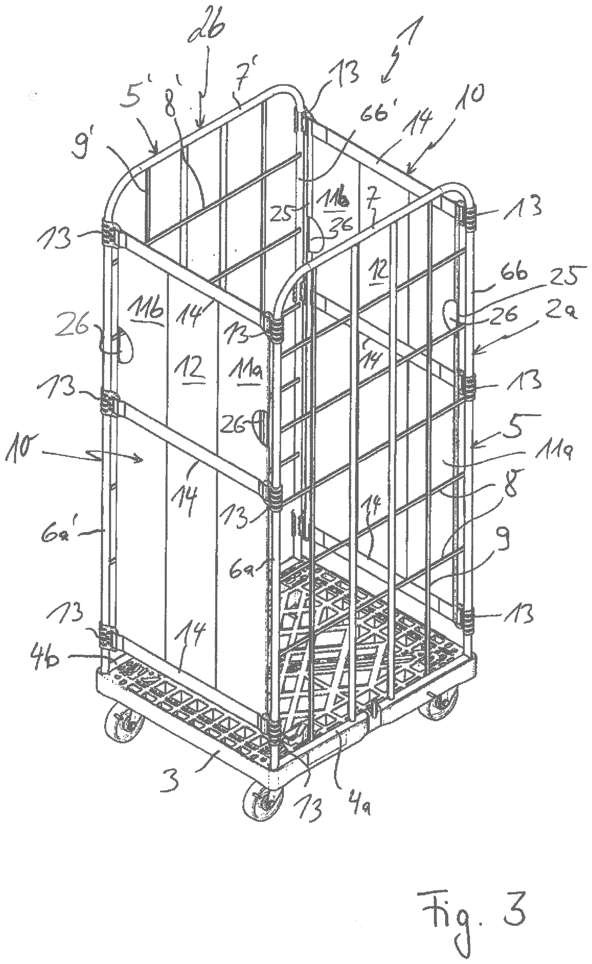

Durch die Elastizität der Schutzwand ist es trotz Befestigung dieser Schutzwand an den Seitenwänden des Rollbehälters möglich, die beiden Seitenwände (also die erste Seitenwand und die zweite Seitenwand) beim Beschicken des Rollbehälters etwas auseinander zu drücken. Durch die an den Seitenwänden befestigte Schutzwand wird bereits beim Beladen des Rollbehälters ein Hinausfallen von Waren aus dem Rollbehälter verhindert. Nach dem Beladen des Rollbehälters wird das Auseinanderdrücken der festen Seitenwände wieder eingestellt, sodass diese wieder in ihre ursprüngliche Stellung überführt werden, in welcher die Seitenwände mit dem Behälterboden einen im Wesentlichen rechten Winkel einschließen. Durch die Elastizität der Schutzwand, insbesondere durch ihre Elastizität in Querrichtung wird auch die Schutzwand aufgrund ihrer Spannkraft automatisch wieder in ihre Ausgangsposition überführt. Dabei zieht die Schutzwand die beiden Seitenwände wieder in ihre ursprüngliche Stellung. Dies ist in der untenstehenden Figurenbeschreibung ebenfalls beschrieben. Nach dem Beladen kann eine weitere Schutzwand am Rollbehälter angebracht werden (siehe auch Fig. 3).

Ein weiterer Vorteil der elastisch und flexibel ausgebildeten Schutzwand des erfindungsgemäßen Rollbehälters besteht darin, dass sie schnell und einfach mittels Befestigungselementen lösbar mit der ersten und mit der zweiten Seitenwand verbunden werden kann. Nach dem Demontieren der Schutzwand vom Rollbehälter kann diese durch ihre Flexibilität zusammengelegt oder -gerollt und dadurch platzsparend verstaut werden.

Um ein Herausfallen von Waren aus dem Rollbehälter zu vermeiden, wird bei den bekannten Rollbehältern die Ware oft durch eine Plastikfolie, die um den gesamten Rollbehälter gewickelt wird, gesichert. Dies ist beim erfindungsgemäßen Rollbehälter nicht mehr nötig, sodass Plastikmüll vermieden werden kann.

Bei einer besonders bevorzugten Ausführungsform des erfindungsgemäßen Rollbehälters handelt es sich bei der ersten Seitenwand und der zweiten Seitenwand jeweils um ein Gittergestell mit jeweils zwei, sich vom Behälterboden nach oben erstreckenden Vertikalstreben, wobei die Schutzwand im Bereich einer ersten Längsseite mit einer Vertikalstrebe der ersten Seitenwand und im Bereich einer zweiten Längsseite mit einer Vertikalstrebe der zweiten Seitenwand verbunden ist.

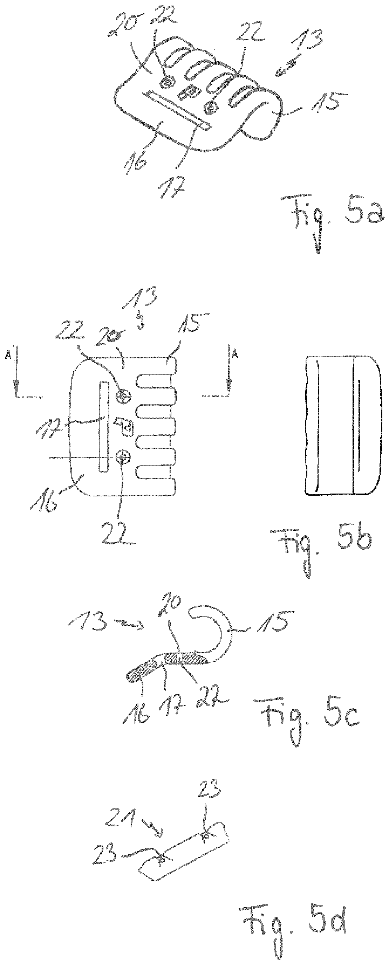

Mit Vorteil sind die Befestigungselemente der Schutzwand Befestigungshaken oder Befestigungsklammern zur Befestigung der Schutzwand an den Vertikalstreben der ersten Seitenwand und der zweiten Seitenwand, wobei die Form der Befestigungselemente vorzugsweise derart an die Form der Vertikalstreben angepasst ist, dass die Befestigungselemente im Wesentlichen formschlüssig mit den Vertikalstreben verbindbar sind, wobei die Befestigungselemente die Vertikalstreben im befestigten Zustand mindestens teilweise umgreifen. Mit Hilfe derartiger Befestigungselemente ist es schnell und einfach möglich, die Schutzwand an den Seitenwänden durch Einhaken der Befestigungselemente an den Vertikalstreben zu befestigen. In der Regel weisen die Vertikalstreben einen kreisförmigen Querschnitt auf, wobei die Form der Befestigungselemente an die Kreisform angepasst ist (siehe hierzu z. B. Fig. 5a - 5c). In der Regel ist die Breite der Schutzwand so bemessen, dass sie im befestigten Zustand in ihrer Breite und Länge komplett zwischen den Seitenwänden aufgespannt ist, wobei sie in der Regel im befestigten Zustand leicht gedehnt vorliegt, sodass sie bereits durch ihre Spannkraft, welche auf die Befestigungselemente wirkt, an den Seitenwänden gehalten wird. Eine Weiterbildung der Befestigungselemente, insbesondere der Befestigungshaken bzw. Befestigungsklammern ist derart ausgebildet, dass zwischen einem Befestigungselement und einer Vertikalstrebe einer Seitenwand eine Rast- oder Klickverbindung herstellbar ist. Durch eine derartige Verbindung zwischen einem Befestigungselement und einer Vertikalstrebe kann die Schutzwand bereits alleine durch eine derartige Verbindung an den Vertikalstreben der Seitenwände gehalten werden.

Mit Vorteil weisen die als Befestigungshaken oder Befestigungsklammern ausgebildeten Befestigungselemente mindestens teilweise ein Schließelement, insbesondere einen Sicherungskeil auf, welche Schließelemente vorzugsweise lösbar mit den Befestigungselementen verbindbar sind und einen entweichungssicheren Sitz der jeweiligen Vertikalstrebe in den jeweiligen Befestigungselementen bewirken. Unter dem Ausdruck "entweichungssicherer Sitz" wird eine derartige formschlüssige Verbindung zwischen einem Befestigungselement und einer Vertikalstrebe verstanden, welche erst nach Entfernen des Schließelements wieder gelöst werden kann. Dadurch wird verhindert, dass sich der Formschluss zwischen einem Befestigungselement und einer Vertikalstrebe beispielsweise durch Unachtsamkeit löst. Durch ein solches unachtsames Lösen des Formschlusses kann es auch zu Verletzungen aufgrund der gegebenen Spannkraft der Schutzwand kommen, indem beispielsweise ein Befestigungsmittel zurückschnellt und eine Bedienperson trifft. Zudem ist die Schutzwand so gegen Diebstahl bzw. ungewolltes Demontieren gesichert.

Bei einer besonders bevorzugten Ausführungsform des erfindungsgemäßen Rollbehälters ist die Schutzwand mindestens teilweise aus Stretchgewebe gefertigt, welches vorzugweise Polyamidfasern, insbesondere Polyamid 6.6 und/oder Elastan umfasst. Ein derartiges Stretchgewebe ist u. a. vorteilhaft beim Befestigen oder Demontieren der Schutzwand an bzw. von den Seitenwänden. Derartiges Gewebe ist auch sehr widerstandsfähig und robust und hält Waren sicher auf dem Rollbehälter. Zudem lässt sich ein derartiges Stretchgewebe, beispielsweise durch Zusammenrollen schnell und einfach verstauen ohne viel Stauraum einzunehmen.

Mit Vorteil umfasst die Schutzwand mindestens einen Abschnitt aus Polyester, insbesondere aus beschichtetem Polyestergewebe. Ein derartiges Polyestergewebe lässt sich beispielsweise besonders vorteilhaft mit Werbung, Schriftzügen oder dergleichen bedrucken. Zudem ist auch das Polyestergewebe flexibel ausgebildet und trägt zu einem einfachen Verstauen der Schutzwand bei.

Mit Vorteil ist mindestens im Bereich der vier Ecken einer im Wesentlichen rechteckig ausgebildeten Schutzwand jeweils ein Befestigungselement angeordnet, wobei jeweils zwei sich auf gleicher Höhe gegenüberliegende Befestigungselemente vorzugsweise über ein elastisch ausgebildetes Band, insbesondere Gummiband miteinander verbunden sind. Dieses elastisch ausgebildete Band lässt sich vorzugweise um mindestens 130% dehnen. Durch derartig elastisch ausgebildete Bänder zwischen zwei sich gegenüberliegenden Befestigungselementen wird ein besonders schnelles, einfaches und sicheres Befestigen der Schutzwand an zwei sich gegenüberstehenden Seitenwänden ermöglicht. Hierbei müssen lediglich zwei sich gegenüberliegende Befestigungselemente an dem betreffenden Gummiband auseinandergezogen werden und an den Seitenwänden, insbesondere den Vertikalstreben der Seitenwände analog eines Expanders eingehakt werden.

Mit Vorteil ist im Bereich der beiden Längsseiten der Schutzwand jeweils eine Stabilisierungsstange vorgesehen, welche vorzugsweise aus Glasfasern gefertigt sind und vorzugsweise in das Gewebe der Schutzwand eingenäht sind. Diese Stabilisierungsstangen verleihen der Schutzwand Formstabilität über die gesamte Fläche.

Mit Vorteil ist im Bereich der beiden Längsseiten der Schutzwand jeweils eine Ausnehmung vorgesehen. In diese Ausnehmung können beispielsweise Spreizzinken eines Spreizwerkzeuges beim Beladen des erfindungsgemäßen Rollbehälters eingesteckt werden.

Die vorliegende Erfindung betrifft ferner eine Schutzwand zur Befestigung an zwei sich gegenüberstehenden Seitenwänden eines Rollbehälters, insbesondere einer Rollpalette, wobei die Schutzwand mindestens teilweise aus elastischem Gewebe gefertigt ist und Befestigungsmittel zur lösbaren Befestigung der Schutzwand an den Seitenwänden des Rollbehälters aufweist. Vorteilhafte Weiterbildungen und Vorteile der erfindungsgemäßen Schutzwand wurden bereits oben im Zusammenhang mit der Schutzwand des erfindungsgemäßen Rollbehälters dargelegt und gelten allesamt auch für die erfindungsgemäße Schutzwand.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: eine perspektivische Darstellung eines erfindungsgemäßen Rollbehälters;
- Fig. 2:: einen vergrößerten Ausschnitt aus dem Rollbehälter gemäß Figur 1 im Bereich eines Befestigungselements;
- Fig. 3:: eine perspektivische Darstellung des Rollbehälters von Figur 1 mit zweiter Schutzwand;
- Fig. 4:: eine erfindungsgemäße Schutzwand;
- Fig. 5a:: eine perspektivische Darstellung eines Befestigungselements;
- Fig. 5b:: eine Draufsicht auf die Befestigungsvorrichtung von Fig. 5a;
- Fig. 5c:: einen Schnitt entlang der Linie A-A durch die Befestigungsvorrichtung gemäß Fig. 5b;
- Fig. 5d:: einen Befestigungskeil zur Befestigung am Befestigungselement gemäß Fig. 5a.

Nachfolgend werden gleiche oder funktionsgleiche Elemente mit den gleichen Bezugszeichen gekennzeichnet.

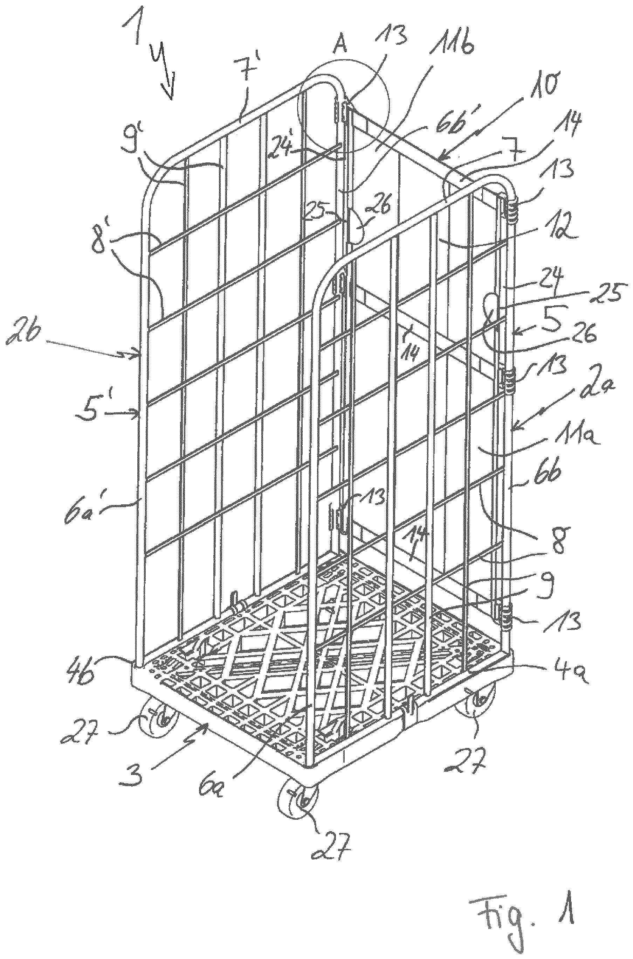

Figur 1 zeigt eine perspektivische Darstellung eines erfindungsgemäßen Rollbehälters in Form einer Rollpalette 1. Die Rollpalette 1 umfasst eine erste Seitenwand 2a und eine, der ersten Seitenwand 2a gegenüberstehende zweite Seitenwand 2b. Die Rollpalette 1 umfasst ferner einen Palettenboden 3, welcher im Wesentlichen rechteckig ausgebildet ist. Im Bereich der Ecken des Palettenbodens 3 sind an der Unterseite Rollen 27 angeordnet. Die beiden Seitenwände 2a und 2b sind im Bereich zweier, sich gegenüberstehender Seitenbereiche 4a, 4b des Bodens 3 angeordnet, wobei die Seitenwände 2a und 2b fest mit dem Palettenboden 3 verbunden sind.

Die beiden Seitenwände 2a und 2b sind als Gittergestelle ausgebildet. So weist das Gittergestell 2a einen Rahmen 5 mit zwei äußeren vertikalen Rahmenstäben 6a und 6b auf. Die beiden vertikalen Rahmenstäbe 6b und 6a sind über einen horizontal angeordneten Verbindungsstab 7 verbunden, wobei die vertikalen Rahmenstäbe 6b, 6a und der horizontale Verbindungsstab 7 einstückig miteinander verbunden sind und einen zusammenhängenden Rahmen bilden, welcher einen runden Querschnitt aufweist. Vom Gitterrahmen 5 werden des Weiteren eine Mehrzahl von horizontal angeordneten Stäben 8 sowie eine Mehrzahl von vertikal angeordneten Stäben 9 gehalten. Das zweite Gittergestell (zweite Seitenwand) 2b ist analog dem ersten Gittergestell 2a aufgebaut und weist ebenfalls einen Gitterrahmen 5' mit zwei vertikalen Rahmenstäben 6a', 6b' sowie einen horizontalen Verbindungsstab 7' auf, welche allesamt einen runden Querschnitt aufweisen. Auch im Gitterrahmen 5' sind horizontale Stäbe 8' und vertikale Stäbe 9' angeordnet. Die beiden Gittergestelle 2a und 2b sind aus Stahl gefertigt.

Die erfindungsgemäße Rollpalette 1, welche in Figur 1 dargestellt ist, weist eine Schutzwand 10 auf, welche zwischen dem ersten Gittergestell 2a und dem zweiten Gittergestell 2b angeordnet ist. Die Schutzwand 10 umfasst zwei äußere Gewebebahnen 11a, 11b und eine zwischen den Gewebebahnen 11a und 11b angeordnete mittlere Gewebebahn 12. Die Gewebebahn 12 ist mit den Gewebebahnen 11a und 11b vernäht. Die Gewebebahnen 11a und 11b bestehen aus einem elastischen Mischgewebe aus 90% Polyamid und 10% Elastan. Die Gewebebahnen 11a und 11b sind quer elastisch mit einer Dehnbarkeit von ca. 30% ausgebildet. Die zwischen den Gewebebahnen 11a und 11b angeordnete Gewebebahn 12 ist aus beschichtetem Polyestergewebe gefertigt, welches ideal geeignet ist zum Bedrucken mit Farbstoff. Die Schutzwand 10 ist im Wesentlichen rechteckig ausgebildet. An den vier Ecken der Schutzwand 10 ist jeweils eine Halteklammer 13 angeordnet. Auch zwischen den an den Ecken angeordneten Halteklammern sind zwei weitere Halteklammern 13 angeordnet. Jeweils zwei auf gleicher Höhe angeordnete Halteklammern 13 sind jeweils über ein elastisches Gummiband 14 miteinander verbunden. Die elastischen Gummibänder 14 sind - ausgehend von einem Grundzustand - um ca. 130% dehnbar. Die Halteklammern 13 sind an die Form und Größe der vertikalen Rahmenstäbe 6a, 6a', 6b und 6b' angepasst und formschlüssig über eine Schnappverbindung mit diesen verbunden. Dabei umgreifen die Halteklammern 13 die vertikalen Rahmenstäbe 6a, 6a', 6b und 6b' teilweise.

Von den sechs Halteklammern 13 sind drei mit dem vertikalen Rahmenstab 6b der Seitenwand 2a verbunden. Die jeweils gegenüberliegenden Halteklammern 13 sind mit dem vertikalen Rahmenstab 6b' der Seitenwand 2b verbunden.

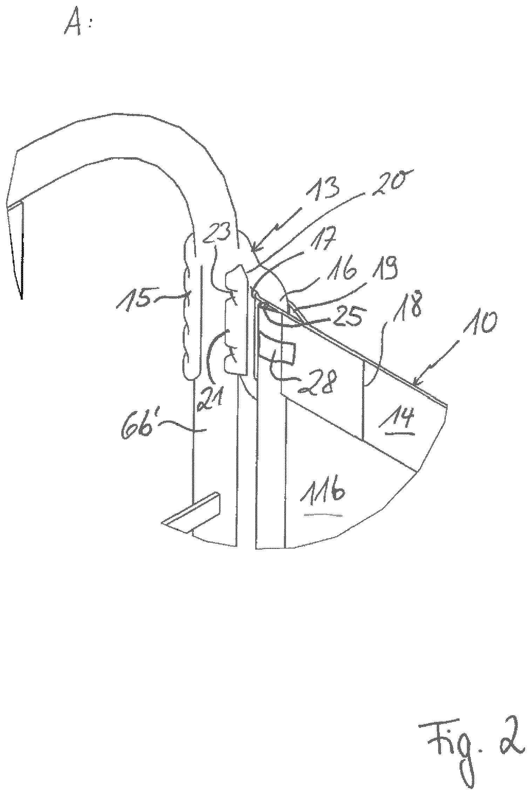

In den Figuren 2, sowie 5a bis 5c ist exemplarisch eine Halteklammer 13 vergrößert dargestellt. Die Halteklammer 13 weist einen Halteabschnitt 15 zur formschlüssigen Verbindung mit einem vertikalen Rahmenstab 6a, 6b, 6a', 6b' auf. Die Halteklammer 13 umfasst ferner einen Verbindungsabschnitt 16 mit einer länglichen Aussparung 17 zum Hindurchführen eines Gummibandes 14. Durch die Ausnehmung 17 wird ein Gummiband 14 geführt, wobei das freie Ende 18 des Gummibandes 14 mit einem hinteren Abschnitt des Gummibandes 14 vernäht wird, sodass sich eine Schlaufe 19 bildet, in welcher die Halteklammer 13 gehalten wird. Die Halteklammer 13, das elastische Gewebe 11b, das Gurtband 14 sowie die Glasfaserstange 25 werden durch ein nicht elastisches Gurtband 28 zusammengehalten. Das gewebte Gurtband 28 ist mit dem Gewebe 11b und dem Gurtband vernäht. Im Übergangbereich 20 zwischen dem Verbindungsabschnitt 16 und dem Halteabschnitt 15 ist ein Sicherungskeil 21 angeordnet. Der Sicherungskeil 21 ist mittels Verbindungspins (hier nicht dargestellt), welche in Aussparungen 22 im Übergangsbereich 20 eingebracht sind, mit dem Übergangsbereich 20 verbunden. Mit einem entsprechenden Werkzeug lässt sich der Sicherungskeil 21 wieder entfernen. Der Sicherungskeil 21, der in der Figur 5d separat dargestellt ist, weist ebenfalls zwei Aussparungen 23 zur Aufnahme der Verbindungspins auf. Mit dem Sicherungskeil 21 wird erreicht, dass ein vertikaler Rahmenstab 6a, 6a', 6b, 6b' sicher in der Halteklammer 13 gehalten werden kann, wobei die Verbindung zwischen der Halteklammer 13 mit Sicherungskeil 21 und einem vertikalen Rahmenstab 6a, 6a', 6b, 6b' nur dann gelöst werden kann, wenn der Sicherungskeil 21 wieder entfernt wird. Dadurch wird vermieden, dass sich die Verbindung zwischen Halteklammer 13 und einem vertikalen Rahmenstab ungewollt löst.

Im Bereich der beiden Längsseiten 24, 24' der Schutzwand 10 ist jeweils eine Glasfaserstange 25 in die Gewebebahn 11a bzw. in die Gewebebahn 11b eingenäht. Des Weiteren sind im Bereich der beiden Längsseiten 24, 24' der Schutzwand 10 Ausnehmungen 26 eingebracht. Im Bereich der Ausnehmungen 26 sind die Glasfaserstangen 25 freigelegt. In die Ausnehmungen 26 können beim Beladen der Rollpalette Spreizzinken eines Spreizwerkzeuges von außen eingreifen, sodass mit Hilfe des Spreizwerkzeuges die Seitenwände 2a und 2b etwas nach außen gedrückt werden können. Durch die Aussparungen 26 wird ein Zerreißen des Gewebes der Schutzwand 10 vermieden.

Bei der Montage der Schutzwand 10 wird in der Regel folgendermaßen vorgegangen. Zunächst werden die drei Halteklammern 13, die an der Längsseite 24 der Schutzwand 10 angeordnet sind, mit dem vertikalen Rahmenstab 6b durch Einklicken des Rahmenstabs 6b in die Verbindungsabschnitte 15 der Halteklammern 13 verbunden. Dann wird die Schutzwand 10 entgegen ihrer Spannkraft in Richtung des vertikalen Rahmenstabes 6b' gezogen, sodass sich die Schutzwand 10 durch Dehnen der Gewebebahnen 11a und 11b in Querrichtung ausdehnt. Dann werden die Haltklammern 13 an der gegenüberliegenden Längsseite 24' der Schutzwand 10 mit dem vertikalen Rahmenstab 6b' formschlüssig verbunden. Anschließend werden die Sicherungskeile 21 über Verbindungspins mit den Halteklammern 13 verbunden.

Die Halteklammern 13 sind aus thermoplastischem Kunststoff gefertigt.

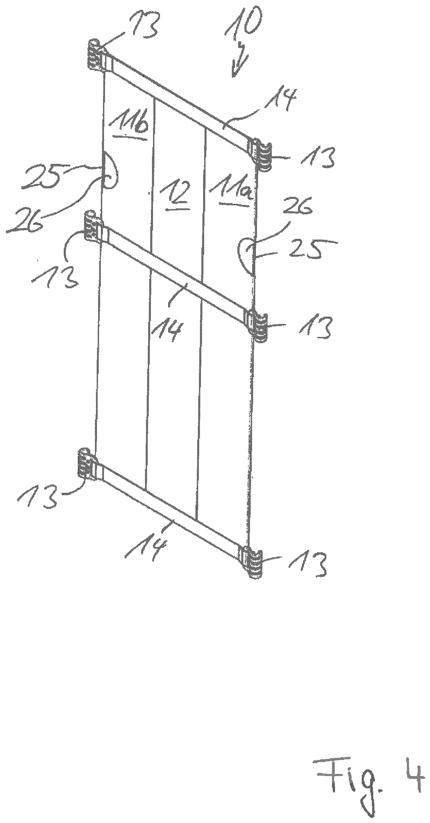

Figur 3 zeigt die Rollpalette 1, wobei diese nun eine zweite Schutzwand 10 aufweist, welche zwischen den vertikalen Rahmenstäben 6a und 6a' angeordnet ist. Bei der in Figur 3 dargestellten Rollpalette wurde nun ein vierseitig geschlossener Behälter geschaffen, bei dem Waren sicher transportiert werden können, wobei das Risiko, dass Ware aus der Rollpalette herausfällt, so gut wie ausgeschlossen ist. Figur 4 zeigt eine Schutzwand 10 im demontierten, jedoch bereits gedehnten Zustand. Durch die Elastizität der Schutzwand 10 ist es in idealer Weise möglich, diese beim Beladen und Auseinanderdrücken der Seitenwände 2a und 2b ebenfalls mit zu dehnen, sodass Waren im befestigten Zustand der Schutzwand 10 von der gegenüberliegenden Seite in die Rollpalette 1 eingebracht werden können. Durch die Elastizität der Schutzwand 10 werden auch Beschädigungen der Schutzwand 10 vermieden, wenn Waren, die sich bereits auf dem Palettenboden 3 befinden, in Richtung der Schutzwand 10 verrutschen. In diesem Falle kann die Schutzwand 10 durch ihre Elastizität etwas nachgeben und trotzdem ein Herausfallen von Waren aus der Rollpalette 1 verhindern.

## Patentansprüche

1. Rollbehälter, insbesondere Rollpalette (1) mit einer ersten Seitenwand (2a) und einer der ersten Seitenwand (2a) gegenüberstehenden zweiten Seitenwand (2b) und einem Behälterboden (3), an welchem die erste Seitenwand (2a) und die zweite Seitenwand (2b) angeordnet sind, **gekennzeichnet durch** mindestens eine mindestens teilweise elastisch und flexibel ausgebildete Schutzwand (10), welche zwischen der ersten Seitenwand (2a) und der zweiten Seitenwand (2b) angeordnet ist und welche mit der ersten Seitenwand (2a) und mit der zweiten Seitenwand (2b) über an der Schutzwand (10) angeordnete Befestigungselemente (13) lösbar verbunden ist.

2. Rollbehälter nach Anspruch 1, **dadurch gekennzeichnet, dass** es sich bei der ersten Seitenwand und der zweiten Seitenwand (2b) jeweils um ein Gittergestell (2a, 2b) mit jeweils zwei sich vom Behälterboden (3) nach oben erstreckenden Vertikalstreben (6a, 6b, 6a', 6b') handelt, wobei die Schutzwand (10) im Bereich einer ersten Längsseite (24) mit einer Vertikalstrebe (6b) der ersten Seitenwand (2a) und im Bereich einer zweiten Längsseite (24') mit einer Vertikalstrebe (6b') der zweiten Seitenwand (2b) verbunden ist.

3. Rollbehälter nach Anspruch 2, **dadurch gekennzeichnet, dass** die Befestigungselemente der Schutzwand (10) Befestigungshaken oder Befestigungsklammern (13) zur Befestigung der Schutzwand (10) an den Vertikalstreben (6a, 6b, 6a', 6b') der ersten Seitenwand (2a) und der zweiten Seitenwand (2b) sind, wobei die Form der Befestigungselemente (13) vorzugsweise derart an die Form der Vertikalstreben (6a, 6b, 6a', 6b') angepasst ist, dass die Befestigungselemente (13) im Wesentlichen formschlüssig mit den Vertikalstreben verbindbar sind, wobei die Befestigungselemente (13) die Vertikalstreben (6a, 6b, 6a', 6b') im befestigten Zustand mindestens teilweise umgreifen.

4. Rollbehälter nach Anspruch 3, **dadurch gekennzeichnet, dass** die Befestigungselemente (13) mindestens teilweise ein Schließelement, insbesondere einen Sicherungskeil (21) aufweisen, welche Schließelemente vorzugsweise lösbar mit den Befestigungselementen (13) verbindbar sind und einen entweichungssicheren Sitz der jeweiligen Vertikalstrebe (6a, 6b, 6a', 6b') in den jeweiligen Befestigungselementen (13) bewirken.

5. Rollbehälter nach einem der vorhergehenden Ansprüche, **dadurch gekennzeichnet, dass** die Schutzwand (10) mindestens teilweise aus Stretchgewebe (11a, 11b) gefertigt ist, welches vorzugsweise Polyamidfasern und/oder Elastan umfasst.

6. Rollbehälter nach einem der vorhergehenden Ansprüche, **dadurch gekennzeichnet, dass** die Schutzwand (10) mindestens einen Abschnitt (12) aus Polyestergewebe, insbesondere beschichtetem Polyestergewebe oder Nylongewebe umfasst.

7. Rollbehälter nach einem der vorhergehenden Ansprüche, **dadurch gekennzeichnet, dass** mindestens im Bereich der vier Ecken einer im Wesentlichen rechteckig ausgebildeten Schutzwand (10) jeweils ein Befestigungselement (13) angeordnet ist, wobei jeweils sich auf gleicher Höhe gegenüberliegende Befestigungselemente (13) vorzugsweise über ein elastisch ausgebildetes Band, insbesondere Gummiband (14) miteinander verbunden sind.

8. Rollbehälter nach einem der vorhergehenden Ansprüche, **dadurch gekennzeichnet, dass** im Bereich der beiden Längsseiten (24, 24') der Schutzwand (10) jeweils eine Stabilisierungsstange (25) vorgesehen ist, welche vorzugsweise aus Glasfasern gefertigt ist und vorzugsweise in das Gewebe der Schutzwand (10) eingenäht ist.

9. Rollbehälter nach einem der vorhergehenden Ansprüche, **dadurch gekennzeichnet, dass** im Bereich der beiden Längsseiten (24, 24') der Schutzwand (10) jeweils eine Ausnehmung (26) vorgesehen ist.

10. Schutzwand (10) zur Befestigung an zwei sich gegenüberstehenden Seitenwänden (2a, 2b) eines Rollbehälters, insbesondere einer Rollpalette (1), wobei die Schutzwand (10) mindestens teilweise aus elastischem Gewebe (11a, 11b) gefertigt ist und Befestigungsmittel (13) zur lösbaren Befestigung der Schutzwand (10) an den Seitenwänden (2a, 2b) des Rollbehälters (1) aufweist.
